# EUROPEAN PATENT APPLICATION

(11) **EP 4 299 674 A1**
(43) Date of publication of application: **03.01.2024**
(21) Application number: 22876891.7
(22) Date of filing: 29.09.2022
(51) Int. Cl.: C08L 75/04, C08K 3/013, C08G 18/38, C08G 18/42

(54) **COMPOSITION**

(30) Priority: 30.09.2021 KR 20210129551
(71) Applicant: LG Chem, Ltd., Seoul 07336 (KR)
(72) Inventor: KIM, Do Yeon, Daejeon 34122 (KR); YANG, Young Jo, Daejeon 34122 (KR); LEE, Jeong Hyun, Daejeon 34122 (KR); KANG, Yang Gu, Daejeon 34122 (KR)
(74) Representative: Hoffmann Eitle
(86) International application number: PCT/KR2022/014646
(87) International publication number: WO 2023/055119

(57) **Abstract**

The present application can provide a composition that when it is curable, it can be cured at room temperature, and can form a heat dissipation material exhibiting an appropriate level of hardness, low adhesion force, and excellent thermal conductivity. In addition, the present application can achieve the low adhesion force, and the like without using a plasticizer or the like, or in a state where even if the plasticizer is used, the use ratio thereof is minimized. The present application can also provide a product comprising the composition, or a cured body thereof.

## Description

### Technical Field

The present application relates to a composition.

### Background Art

As the number of electric or electronic devices requiring heat management, such as batteries, increases, the importance of heat dissipation materials increases.

A typical heat dissipation material as conventionally known is a material in which a resin binder is filled with a thermally conductive filler (for example, Patent Document 1).

In such a heat dissipation material, a silicone resin, a polyolefin resin, an acrylic resin, or an epoxy resin, and the like is usually used as the resin binder.

The heat dissipation material is basically required to have an excellent thermal conductivity, and required to have additional functions as well depending on the use. For example, depending on the use, the heat dissipation material may be required to exhibit low adhesion force to a specific adherend together with the high thermal conductivity.

For example, when it is necessary to replace a part in contact with a heat dissipation material in a product, or necessary to change a location or the like of a heat dissipation material in a process, the heat dissipation material needs to exhibit low adhesion force.

Among known heat dissipation materials, materials showing low adhesion force include materials to which a silicone resin is applied as the resin binder. However, the silicone resin is relatively expensive. In addition, the silicone resin comprises components that cause contact failure and the like when applied to electronic/electrical products, so that the uses are limited.

The polyurethane material applied even in Patent Document 1 can form a heat dissipation material having high thermal conductivity, and has various other advantages, but is a material exhibiting high adhesion force to most adherends, and it is not easy to realize low adhesion force even with materials such as acrylic resins or epoxy resins.

A method of lowering adhesion force of a material exhibiting high adhesion force includes a method of blending a plasticizer. However, the formulated plasticizer for control of adhesion force has a problem of damaging the inherent merits of the material itself or being eluted during a use process, and the like.

It is necessary to secure an appropriate level of hardness for the heat dissipation material. For example, if the hardness of the heat dissipation material is too high, the material itself tends to be excessively brittle, and when impact resistance, vibration resistance, and durability are required, it is difficult to apply such a heat dissipation material.

When the heat dissipation material is formed through a curable composition, it may be required that the composition has so-called room temperature curability depending on the use. This is because it is often difficult to apply heat, electromagnetic waves, or moisture required for curing in the process of forming the heat dissipation material in the electric or electronic devices requiring heat management.

However, it is a difficult task to obtain a material exhibiting an appropriate level of hardness after curing, and low adhesion force to a specific adherend (e.g., metal material), and ensuring high thermal conductivity while having room temperature curability.

### [Prior Art Documents]

### [Patent Documents]

(Patent Document 1) Korean Laid-Open Patent Publication No. 2016-0105354

### Disclosure

### Technical Problem

The present application is intended to provide a composition. It is one object of the present application that when the composition is curable, it can be cured at room temperature, and form a heat dissipation material exhibiting an appropriate level of hardness, low adhesion force, and excellent thermal conductivity. In addition, the object of the present application includes achieving the low adhesion force without using a plasticizer or the like, or in a state where even if the plasticizer is used, the use ratio thereof is minimized.

The present application is also intended to provide a product comprising the composition, or a cured body thereof.

### Technical Solution

Among the physical properties mentioned in this specification, when the measurement temperature affects the result, the relevant physical property is a physical property measured at room temperature, unless otherwise specified. The term room temperature is a natural temperature without warming or cooling, which means usually one temperature in a range of about 10°C to 30°C or a temperature of about 23°C or about 25°C or so. Also, in this specification, unless otherwise specified, the unit of temperature is °C.

Among the physical properties mentioned in this specification, when the measurement pressure affects the result, the relevant physical property is a physical property measured at normal pressure, unless otherwise specified. The term normal pressure is a natural pressure without pressurization or depressurization, which refers to an atmospheric pressure in a range of about 700 mmHg to 800 mmHg as the normal pressure.

The composition of the present application may be a heat dissipation material, or a composition capable of forming the heat dissipation material.

The matter that the composition of the present application is a heat dissipation material means that the composition itself exhibits adhesion force to aluminum, hardness, and thermal conductivity, which are described below.

In addition, the matter that the composition of the present application can form a heat dissipation material means that the composition forms a material (e.g., a cured body) exhibiting adhesion force to aluminum, hardness, and thermal conductivity through a curing reaction or the like.

The composition of the present application may be a curable composition. When the composition of the present application is a curable composition, the composition may be a room temperature curable composition. The room temperature curable composition means a composition that can be cured in a state of being maintained at room temperature.

When the composition of the present application is a curable composition, the composition may be a one-component composition or a two-component composition. The term one-component composition means a composition, in which components necessary for curing are mixed along with each other to be stored, and the term two-component composition means a composition in which at least some of components necessary for curing are physically separated, and stored.

The composition of the present application may be a polyurethane composition. The term polyurethane composition means a composition comprising polyurethane or a component capable of forming polyurethane (e.g., a polyol compound, a monohydric alcohol, a thiol compound, and/or a polyisocyanate, and the like, which are described below) as a main component. Here, the matter of comprising it as a main component means a case where the lower limit of the content of the polyurethane or the component capable of forming the polyurethane in the composition is 55 weight%, 60 weight%, 65 weight%, 70 weight%, 75 weight%, 80 weight%, 85 weight%, 90 weight% or 95 weight%. The upper limit of the content of the polyurethane or the component capable of forming the polyurethane in the composition may be 100 weight%. The content of the polyurethane or the component capable of forming the polyurethane may be less than or equal to, or less than any one of the above-described upper limits, may be more than or equal to, or more than any one of the above-described lower limits, or may be less than or equal to, or less than any one of the above-described upper limits while being more than or equal to, or more than any one of the above-described lower limits. When the composition comprises a filler and/or a solvent, the content of the polyurethane or the component capable of forming the polyurethane is the content in the composition excluding the filler and the solvent.

The composition of the present application may be a solventless composition. The term solventless composition means that the content of the solvent in the composition is 5 weight% or less, 4 weight% or less, 3 weight% or less, 2 weight% or less, 1 weight% or less, or 0.5 weight% or less. The solvent content in the solventless composition may be 0 weight% or more, or 0 weight% or so. That is, the solventless composition may not substantially comprise a solvent.

The composition of the present application may exhibit low adhesion force with respect to a specific adherend or form a cured body exhibiting low adhesion force. For example, the polyurethane is known as an adhesive material exhibiting excellent adhesion to various adherends. Therefore, as a method of making the polyurethane composition exhibit low adhesion force to an adherend, a method of introducing a component that lowers the adhesion force, such as a plasticizer, is usually used. When components of such a plasticizer and the like are applied, it is possible to lower the adhesion force of the polyurethane material, but there may be a problem that the relevant component deteriorates other physical properties which could be secured in the polyurethane, or it elutes out of the material during the use process of the polyurethane material. However, in the present application, the low adhesion force can also be achieved while using no adhesion force reducing components such as plasticizers or minimizing the used amount. Therefore, in the present application, it is possible to provide a material that solves the problem of high adhesion force that is not required depending on the use while taking the advantages of the material.

For example, the upper limit of the adhesion force of the composition or its cured body to aluminum may be 1 N/mm², 0.9 N/mm², 0.8 N/mm², 0.7 N/mm², 0.6 N/mm², 0.5 N/mm², 0.4 N/mm², 0.3 N/mm², 0.2 N/mm² or 0.1 N/mm² or so. The adhesion force may be the adhesion force of the composition itself to aluminum, or may be the adhesion force of the cured composition to aluminum when the composition is curable. The lower limit of the adhesion force to aluminum is not particularly limited. For example, the lower limit of the adhesion force may be 0 N/mm², 0.01 N/mm², 0.02 N/mm², 0.03 N/mm², 0.04 N/mm², 0.05 N/mm², 0.06 N/mm², 0.07 N/mm², 0.08 N/mm², 0.09 N/mm², 0.1 N/mm², 0.11 N/mm², 0.12 N/mm², 0.13 N/mm² or 0.14 N/mm² or so. The adhesion force may be less than or equal to, or less than any one of the above-described upper limits, may be more than or equal to, or more than any one of the above-described lower limits, or may be less than or equal to, or less than any one of the above-described upper limits while being more than or equal to, or more than any one of the above-described lower limits. The adhesion force to aluminum can be measured in the manner described in Examples of this specification. In one example, the composition may have adhesion force of 0 N/mm² to aluminum. That is, the composition may be a composition in which the adhesion force to aluminum is not substantially measured.

The composition may also exhibit suitable hardness. The hardness may be the hardness of the composition itself or, if the composition is curable, it may be the hardness of the cured composition. As the composition is applied as a heat dissipation material, the hardness of the composition may be adjusted so that a product having excellent impact resistance, vibration resistance and durability may be provided according to the application use. For example, the upper limit of the hardness (shore OO hardness) in a shore OO type of the composition or its cured body may be 90, 88, 86, 84 or 82 or so, and the upper limit may be 40, 45, 50, 55, 60, 65, 70, 75, 80, 82 or 84 or so. The hardness may be less than or equal to, or less than any one of the above-described upper limits, may be more than or equal to, or more than any one of the above-described lower limits, or may be less than or equal to, or less than any one of the above-described upper limits while being more than or equal to, or more than any one of the above-described lower limits. The hardness may be measured by the method disclosed in Examples, which are described below.

The composition may exhibit excellent thermal conductivity characteristics. For example, the lower limit of the thermal conductivity of the composition or its cured body may be 1.2 W/mK, 1.4 W/mK, 1.6 W/mK, 1.8 W/mK, 2.0 W/mK, 2.2 W/mK, 2.4 W/mK, 2.6 W/mK or 2.8 W/mK or so, and the upper limit may also be 10 W/mK, 9 W/mK, 8 W/mK, 7 W/mK, 6 W/mK, 5 W/mK, 4 W /mK or 3 W/mK or so. The thermal conductivity may be less than or equal to, or less than any one of the above-described upper limits, may be more than or equal to, or more than any one of the above-described lower limits, or may be less than or equal to, or less than any one of the above-described upper limits while being more than or equal to, or more than any one of the above-described lower limits. The thermal conductivity may be the thermal conductivity of the composition itself, or if the composition is curable, it may be the thermal conductivity of the cured composition. This thermal conductivity can be measured according to ASTM D5470 standard.

The composition may also exhibit adequate flexibility. By adjusting the flexibility of the composition to a desired level, the application uses may be greatly expanded. For example, a curvature radius of the composition may be adjusted. The curvature radius may be the curvature radius of the composition itself or, if the composition is curable, it may be the curvature radius of the cured composition. The lower limit of the curvature radius may be, for example, 1, 2, 3, 4, 5 or 6 or so, and the upper limit may be 20, 19, 18, 17, 16, 15, 14, 13, 12, 11, 10, 9, 8 or 7 or so. The curvature radius may be less than or equal to, or less than any one of the above-described upper limits, may be more than or equal to, or more than any one of the above-described lower limits, or may be within a range of less than or equal to any one of the above-described upper limits while being more than or equal to, or more than any one of the above-described lower limits. The curvature radius of such a composition can be measured by the method disclosed in Examples, which are described below. Also, the unit of the curvature radius is mm.

The composition of the present application may have insulation properties. That is, the composition may have insulation properties and/or form a cured body having insulation properties. For example, the composition or the cured body thereof may have a dielectric breakdown voltage of about 3 kV/mm or more, about 5 kV/mm or more, about 7 kV/mm or more, 10 kV/mm or more, 15 kV/mm or more, or 20 kV/mm or more as measured in accordance with ASTM D149. The higher the value of the dielectric breakdown voltage, it seems to have excellent insulation properties, and thus the upper limit is not particularly limited, but considering the composition or the like of the composition, the dielectric breakdown voltage may be about 50 kV/mm or less, 45 kV/mm or less, 40 kV/mm or less, 35 kV/mm or less, or 30 kV/mm or less or so. Such a dielectric breakdown voltage can be controlled by adjusting the insulation properties of the composition, which can be achieved, for example, by applying an insulating filler in the resin layer. In general, among fillers, a ceramic filler is known as a component capable of securing insulation properties.

The composition or the cured body thereof may have flame retardancy. For example, the composition or the cured body thereof may exhibit Grade V-0 in the UL 94 V Test (Vertical Burning Test). Accordingly, it is possible to secure stability against fires and other accidents that are of concern depending on the application uses of the composition.

The composition or the cured body thereof may have a specific gravity of 5 or less. In another example, the specific gravity may be 4.5 or less, 4 or less, 3.5 or less, or 3 or less. A resin layer exhibiting a specific gravity within such a range is advantageous for providing a more lightweight product. The lower limit of the specific gravity is not particularly limited. For example, the specific gravity may be about 1.5 or more or 2 or more. In order that the composition or the cured body thereof exhibits the specific gravity, components added to the resin layer may be adjusted. For example, when adding a filler, a filler capable of securing a desired characteristic (e.g., thermal conductivity) even at a low specific gravity as much as possible, that is, a method of applying a filler with a low specific gravity by itself or applying a surface-treated filler, and the like may be used.

In the composition or the cured body thereof, a 5% weight loss temperature in a thermogravimetric analysis (TGA) may be 400°C or more, or an 800°C remaining amount may be 70 weight% or more. The stability at a high temperatures may be further improved by such a property. In another example, the 800°C remaining amount may be about 75 weight% or more, about 80 weight% or more, about 85 weight% or more, or about 90 weight% or more. In another example, the 800°C remaining amount may be about 99 weight% or less. The thermogravimetric analysis (TGA) can be measured within the range of 25°C to 800°C at a heating rate of 20°C/min under a nitrogen (N₂) atmosphere of 60 cm³/min. The thermogravimetric analysis (TGA) result can also be achieved through composition control of the composition. For example, the 800°C remaining amount is usually influenced by the type or ratio of the filler contained in the composition, and when an excessive amount of filler is included, the remaining amount increases.

The composition may comprise a resin component. In this specification, the term resin component includes as a component capable of forming a resin component through a curing reaction or the like, as well as a component known as a resin in the industry. For example, a polyurethane may be formed by reacting a polyol compound with a polyisocyanate, and the like, where in many cases, the polyisocyanate itself is not a resin component, and in some cases, the polyol compound is also not a resin component. In addition, a monohydric alcohol or thiol compound, which is described below, mentioned in this specification may not be a resin component. However, the polyol compound, polyisocyanate, monohydric alcohol and/or thiol compound in this specification is intended to form the polyurethane corresponding to the resin component, so that it can be regarded as a resin component in this specification.

When the composition of the present application is a polyurethane composition, the resin component may comprise one or more selected from the group consisting of a polyurethane, a polyol compound, a monohydric alcohol, a thiol compound, and a polyisocyanate. Here, the polyol compound, monohydric alcohol, thiol compound, or polyisocyanate may be included as a resin component when the composition of the present application is a curable composition.

In this specification, the term polyol compound means a compound containing two or more hydroxy groups. Such a polyol compound may be a monomolecular, oligomeric, or polymeric compound. The number of hydroxy groups included in the polyol compound is not particularly limited, but in one example, the lower limit of the number of hydroxy groups included in the polyol compound may be 2 or 3 or so, and the upper limit may also be 10, 9, 8, 7, 6, 5, 4, 3 or 2 or so. The number of hydroxy groups may be less than or equal to, or less than any one of the above-described upper limits, may be more than or equal to, or more than any one of the above-described lower limits, or may be less than or equal to, or less than any one of the above-described upper limits while being more than or equal to, or more than any one of the above-described lower limits.

The polyol compound may be selected to secure desired physical properties.

For example, the composition of the present application or the resin component may comprise, as the polyol compound, a polyfunctional polyol compound with 3 functionalities or more, and a bifunctional polyol compound together. Here, the 3 functionalities or more means that the number of hydroxy groups included in the polyol compound is three or more, and the bifunctional means that the number of hydroxy groups included in the polyol compound is two. The upper limit of the number of hydroxy groups included in the polyfunctional polyol compound with 3 functionalities or more may be 10, 9, 8, 7, 6, 5, 4 or 3 or so. The number of hydroxy groups included in the polyfunctional polyol compound with 3 functionalities or more may also be less than or equal to, or less than any one of the above-described upper limits while being 3 or more.

At least one of the polyfunctional polyol compound with 3 functionalities or more, and the bifunctional polyol compound may have a controlled number average molecular weight (Mn). For example, the lower limit of the number average molecular weight may be 300 g/mol, 500 g/mol, 700 g/mol, 900 g/mol, 1100 g/mol, 1300 g/mol, 1500 g/mol, 1700 g/mol or 1900 g/mol or so, and the upper limit may also be 3000 g/mol, 2800g/mol, 2600g/mol, 2400g/mol, 2200g/mol, 2000g/mol, 1800g/mol, 1600g/mol, 1400g/mol or 1200g/mol or so. The number average molecular weight may be less than or equal to, or less than any one of the above-described upper limits, may be more than or equal to, or more than any one of the above-described lower limits, or may be less than or equal to, or less than any one of the above-described upper limits while being more than or equal to, or more than any one of the above-described lower limits. By applying the polyol compound having such a number average molecular weight, it is possible to more efficiently secure desired physical properties. In one example, both the polyfunctional polyol compound with 3 functionalities or more, and the bifunctional polyol compound may have a number average molecular weight within the above range.

In one example, one of the polyfunctional polyol compound with 3 functionalities or more, and the bifunctional polyol compound may have a number average molecular weight of 1500 g/mol or more, and the other may have a number average molecular weight of less than 1500 g/mol. The lower limit of the number average molecular weight of the polyol compound having a higher number average molecular weight of the polyfunctional polyol compound with 3 functionalities or more and the bifunctional polyol compound may be 1500 g/mol, 1700 g/mol or 1900 g/mol or so, and the upper limit may also be 3000 g/mol, 2800 g/mol, 2600 g/mol, 2400 g/mol, 2200 g/mol or 2000 g/mol or so. The number average molecular weight may be less than or equal to, or less than any one of the above-described upper limits, may be more than or equal to, or more than any one of the above-described lower limits, or may be less than or equal to, or less than any one of the above-described upper limits while being more than or equal to, or more than any one of the above-described lower limits. The upper limit of the number average molecular weight of the polyol compound having a smaller number average molecular weight of the polyfunctional polyol compound with 3 functionalities or more and the bifunctional polyol compound may be 1500 g/mol, 1400 g/mol, 1300 g/mol, 1200 g/mol, 1100 g/mol or 1000 g/mol or so, and the lower limit may also be 500 g/mol, 700 g/mol or 900 g/mol or so. The number average molecular weight may be less than or equal to, or less than any one of the above-described upper limits, may be more than or equal to, or more than any one of the above-described lower limits, or may be less than or equal to, or less than any one of the above-described upper limits while being more than or equal to, or more than any one of the above-described lower limits.

Although not particularly limited, the polyfunctional polyol compound with 3 functionalities or more may have a higher number average molecular weight than that of the bifunctional polyol compound.

In one example, one of the polyfunctional polyol compound with 3 functionalities or more and the bifunctional polyol compound may be a so-called polyester polyol, and the other may be a polyether polyol.

As the polyester polyol, a known polyester polyol may be applied without special restrictions. For example, as the polyester polyol compound, a polyol having an alkane diol unit, a polyol unit, and a dicarboxylic acid unit may also be used. Such a polyol may be a mixture of the alkane diol, polyol, and dicarboxylic acid, or may be a reactant thereof. At this time, the alkane diol may be exemplified by a diol compound with 1 to 20 carbon atoms, 4 to 20 carbon atoms, 4 to 16 carbon atoms, or 4 to 12 carbon atoms such as 3-methyl-1,5-pentanediol, 1,9-nonanediol or 1,6-hexanediol. Also, the polyol may be exemplified by an alkane with 1 to 20 carbon atoms, 4 to 20 carbon atoms, 4 to 16 carbon atoms, or 4 to 12 carbon atoms substituted with 3 to 10, 3 to 9, 3 to 8, 3 to 7, 3 to 6, 3 to 5, or 3 to 4 hydroxy groups, such as trimethylolpropane. In addition, the dicarboxylic acid may be exemplified by adipic acid, terephthalic acid, isophthalic acid, or sebacic acid, and the like, where a suitable example may include adipic acid or sebacic acid.

This kind of polyester polyol compound is known, for example, under a product name of Kuraray's P-510, P-1010, P-2010, P-3010, P-4010, P-5010, P-6010, F-510, F-1010, F-2010, F-3010, P-2011, P-520, P-2020, P-1012, P-2012, P-630, P-2030, P-2050 or N-2010, and the like.

As the polyether polyol, a known polyether polyol may be applied without special restrictions. For example, a so-called polyalkylene glycol may be applied as the polyether polyol compound. Here, the alkylene may be exemplified by an alkylene with 1 to 12 carbon atoms, 1 to 8 carbon atoms, or 1 to 4 carbon atoms.

In this specification, the alkylene or alkylene group means a divalent substituent formed by leaving two hydrogen atoms from an alkane, where the two hydrogen atoms may also be left from other carbon atoms of the alkane, and may also be left from one carbon atom of the alkane.

In order to secure appropriate physical properties, the polyester polyol may be applied as the polyfunctional polyol compound with 3 functionalities or more of the polyfunctional polyol compound with 3 functionalities or more and the bifunctional polyol compound, and the polyether polyol may be applied as the bifunctional polyol compound.

When the composition of the present application or the resin component comprises the polyfunctional polyol compound with 3 functionalities or more and the bifunctional polyol compound, the lower limit of the content of the bifunctional polyol compound may be 5 parts by weight, 10 parts by weight, 15 parts by weight, 20 parts by weight, 25 parts by weight, 30 parts by weight, 35 parts by weight, 40 parts by weight, 45 parts by weight, 50 parts by weight, 55 parts by weight, 60 parts by weight, 65 parts by weight, 70 parts by weight, 75 parts by weight, 80 parts by weight, 85 parts by weight or 90 parts by weight or so, and the upper limit thereof may be 200 parts by weight, 190 parts by weight, 180 parts by weight, 170 parts by weight, 160 parts by weight parts, 150 parts by weight, 140 parts by weight, 130 parts by weight, 120 parts by weight, 110 parts by weight, 100 parts by weight, or 90 parts by weight or so, relative to 100 parts by weight of the polyfunctional polyol compound with 3 functionalities or more. The ratio may be less than or equal to, or less than any one of the above-described upper limits, may be more than or equal to, or more than any one of the above-described lower limits, or may be less than or equal to, or less than any one of the above-described upper limits while being more than or equal to, or more than any one of the above-described lower limits. Under such a ratio, desired physical properties may be effectively secured.

The resin component may further comprise a monohydric alcohol or thiol compound. Here, the monohydric alcohol is a compound containing one hydroxy group. By additionally applying such components, desired physical properties may be more effectively secured.

As the monohydric alcohol or thiol compound, a compound having a molecular weight (molar mass) within a predetermined range may be used. For example, the lower limit of the molecular weight (molar mass) of the monohydric alcohol or thiol compound may be 50 g/mol, 55 g/mol, 60 g/mol, 65 g/mol, 70 g/mol, 75 g/mol, 80 g/mol, 85g/mol, 90g/mol, 95g/mol, 100g/mol, 110g/mol, 120g/mol, 130g/mol, 140g/mol or 150g/mol or so, and the upper limit thereof may also be 500g/mol, 480g/mol, 460g/mol, 440g/mol, 420g/mol, 400g/mol, 380g/mol, 360g/mol, 340g/mol, 320g/mol, 300g/mol, 280g/mol, 260g/mol, 240g/mol, 220 g/mol, 200 g/mol, 180 g/mol or 160 g/mol or so. The molecular weight (molar mass) of the monohydric alcohol or thiol compound may be less than or equal to, or less than any one of the above-described upper limits, may be more than or equal to, or more than any one of the above-described lower limits, or may be less than or equal to, or less than any one of the above-described upper limits while being more than or equal to, or more than any one of the above-described lower limits.

The type of the applicable monohydric alcohol or thiol compound is not particularly limited. In the present application, a compound having one hydroxy group (monohydric alcohol) or a compound having one thiol group (thiol compound) may be applied without special limitation. A non-limiting example of the applicable monohydric alcohol may be exemplified by 2-propylheptanol, ethanol, propanol, butanol, pentanol, hexanol, heptanol, octanol, 2-ethylhexanol, nonanol, decanol, ethenol, propenol, butenol, acetylenol, propynol, butynol, phenol, methylphenol, pyridinol and/or methylpyridinol, and the like, and the thiol compound may be exemplified by ethanethiol, propanethiol, butanethiol, pentanethiol, hexanethiol, heptanethiol, octanethiol, 2-ethylhexanethiol, nonanethiol, decanthiol, 2-propylheptanethiol, ethenethiol, propenethiol, butenethiol, acetylenethiol, propynthiol, butynthiol, benzenethiol, methylbenzenethiol, pyridinethiol and/or methylpyridinethiol, and the like, without being limited thereto.

If it is included, the lower limit of the content of the monohydric alcohol or thiol compound may be 1 part by weight, 3 parts by weight, 5 parts by weight, 7 parts by weight, 9 parts by weight, 11 parts by weight It may be about 13 parts by weight, 15 parts by weight, 17 parts by weight, 19 parts by weight, 21 parts by weight, 23 parts by weight, 25 parts by weight, 27 parts by weight or 29 parts by weight or so, and the upper limit thereof may also be 100 parts by weight, 95 parts by weight, 90 parts by weight, 85 parts by weight, 80 parts by weight, 75 parts by weight, 70 parts by weight, 65 parts by weight, 60 parts by weight, 55 parts by weight, 50 parts by weight, 45 parts by weight, 40 parts by weight, 35 parts by weight part or about 30 parts by weight or so, relative to 100 parts by weight of the polyfunctional polyol compound with 3 functionalities or more. The ratio may be less than or equal to, or less than any one of the above-described upper limits, may be more than or equal to, or more than any one of the above-described lower limits, or may be less than or equal to, or less than any one of the above-described upper limits while being more than or equal to, or more than any one of the above-described lower limits. At such a ratio, desired physical properties can be secured more efficiently.

The composition may comprise a polyisocyanate. This polyisocyanate may react with the polyol compound and the like to form a polyurethane. The term polyisocyanate means a compound having two or more isocyanate groups. The lower limit of the number of isocyanate groups in the polyisocyanate may be 2 or 3 or so, and the upper limit thereof may be 10, 9, 8, 7, 6, 5, 4, 3 or 2 or so. The number of the isocyanate groups may be less than or equal to, or less than any one of the above-described upper limits, may be more than or equal to, or more than any one of the above-described lower limits, or may be within a range of less than or equal to, or less than any one of the above-described upper limits while being more than or equal to, or more than any one of the above-described lower limits.

The type of polyisocyanate is not particularly limited, but a non-aromatic polyisocyanate containing no aromatic group may be used to secure desired physical properties.

As the polyisocyanate compound, for example, aliphatic polyisocyanates such as hexamethylene diisocyanate, trimethylhexamethylene diisocyanate, lysine diisocyanate, norbornane diisocyanate methyl, ethylene diisocyanate, propylene diisocyanate, or tetramethylene diisocyanate; alicyclic polyisocyanates such as transcyclohexane-1,4-diisocyanate, isophorone diisocyanate, bis(isocyanatemethyl)cyclohexane diisocyanate, or dicyclohexylmethane diisocyanate; or one or more carbodiimide-modified polyisocyanates or isocyanurate-modified polyisocyanates of the foregoing, and the like may be used. In addition, as the polyisocyanate, addition reaction products of the diisocyanate and polyol (for example, trimethylol propane, etc.) as described above may also be used. Furthermore, a mixture of two or more of the above-listed compounds may be used.

In order to secure suitable physical properties, as the polyisocyanate, a polyfunctional polyisocyanate having 3 functionalities or more, that is, 3 or more isocyanate groups, and a bifunctional polyisocyanate (compound having two isocyanate groups) may be used together. The upper limit of the number of isocyanate groups included in the polyfunctional polyisocyanate with 3 functionalities or more may be 10, 9, 8, 7, 6, 5, 4 or 3 or so. The number of isocyanate groups of the polyfunctional polyisocyanate with 3 functionalities or more may also be less than or equal to, or less than any one of the above-described upper limits while being 3 or more.

The application ratio of the polyisocyanate may be adjusted in consideration of the number of hydroxy groups and thiol groups present in the polyol compound, monohydric alcohol and/or thiol compound included in the composition, and physical properties after curing.

For example, the polyisocyanate may be included in an appropriate ratio in a range of 10 parts by weight to 2000 parts by weight relative to 100 parts by weight of the polyol compound present in the composition.

When the polyfunctional polyisocyanate with 3 functionalities or more and the bifunctional polyisocyanate are simultaneously included as the polyisocyanate, the lower limit of the ratio of the bifunctional polyisocyanate may be 5 parts by weight part, 10 parts by weight, 15 parts by weight, 20 parts by weight, 25 parts by weight, 30 parts by weight, 35 parts by weight, 40 parts by weight, 45 parts by weight, 50 parts by weight, 55 parts by weight, or 60 parts by weight or so, and the upper limit thereof may also be 200 parts by weight, 190 parts by weight, 180 parts by weight, 170 parts by weight, 160 parts by weight, 150 parts by weight, 140 parts by weight, 130 parts by weight, 120 parts by weight, 110 parts by weight, 100 parts by weight, 90 parts by weight, 80 parts by weight, 70 parts by weight or 60 parts by weight or so, relative to 100 parts by weight of the polyfunctional polyisocyanate with 3 functionalities or more. The ratio may be less than or equal to, or less than any one of the above-described upper limits, may be more than or equal to, or more than any one of the above-described lower limits, or may be less than or equal to, or less than any one of the above-described upper limits while being more than or equal to, or more than any one of the above-described lower limits. Under such a ratio, desired physical properties can be effectively secured.

The composition may further comprise a filler component as an additional component. The term filler component means a component composed of a filler, that is, a component comprising only a filler.

In one example, the filler component may comprise two or more fillers having different average particle diameters. In one example, the filler component may comprise three or more fillers having different average particle diameters, or may be composed of three to six, three to five, three to four, or three fillers, having different average particle diameters. That is, in one example, the filler component may also comprise only three to six, three to five, three to four, or three fillers, having different average particle diameters.

In another example, the filler component may exhibit at least two peaks in a volume curve of a particle size distribution measured using laser diffraction. In one example, the filler component may exhibit three or more peaks in the volume curve of the particle size distribution, or may exhibit three to six, three to five, three to four, or three peaks. For example, in the range of the filler component exhibiting three peaks, the filler component exhibiting one, two, or four or more peaks is not included.

The average particle diameter in the filler of the present application means a particle diameter at which the volume accumulation becomes 50% in the volume curve of the particle size distribution measured by laser diffraction, which may also be referred to as a median diameter. That is, in the present application, the particle size distribution is obtained on a volume basis through the laser diffraction, and the particle diameter at the point where the cumulative value becomes 50% in the cumulative curve with 100% of the total volume is set as the average particle diameter, and in another example, such an average particle diameter may be referred to as a median particle size or a D50 particle diameter.

Therefore, here, the two fillers having different average particle diameters may mean fillers having different particle diameters at the point where the cumulative value becomes 50% in the volume curve of the particle size distribution.

When two or more fillers having different average particle diameters are usually mixed in order to form a filler component, as many peaks as the types of mixed fillers appear on the volume curve of the particle size distribution measured using laser diffraction with respect to the filler component. Therefore, for example, when three fillers having different average particle diameters are mixed to constitute a filler component, the volume curve of the particle size distribution measured using the laser diffraction regarding the filler component shows three peaks.

The filler component of the composition of the present application may be a thermally conductive filler component. The term thermally conductive filler component means a filler component functioning so that the composition or the cured body thereof exhibits the above-described thermal conductivity.

In one example, the filler component may comprise at least a first filler having an average particle diameter of 60 µm to 200 µm, a second filler having an average particle diameter in a range of 10 µm to 30 µm, and a third filler having an average particle diameter of 5 µm or less.

The lower limit of the average particle diameter of the first filler may be 62 µm, 64 µm, 66 µm or 68 µm or so, and the upper limit thereof may be 200 µm, 195 µm, 190 µm, 185 µm, 180 µm, 175 µm, 170 µm, 165 µm, 160 µm, 155 µm, 150 µm, 145 µm, 140 µm, 135 µm, 130 µm, 125 µm, about 120 µm, 115 µm, 110 µm, 105 µm, 100 µm, 95 µm, 90 µm, 85 µm, 80 µm or about 75 µm or so. The average particle diameter of the first filler may be less than or equal to, or less than any one of the above-described upper limits, may be more than or equal to, or more than any one of the above-described lower limits, or may be within a range of less than or equal to, or less than any one of the above-described upper limits while being more than or equal to, or more than any one of the above-described lower limits.

The lower limit of the average particle diameter of the second filler may be 10 µm, 12 µm, 13 µm, 14 µm, 15 µm, 16 µm, 17 µm, 18 µm, 19 µm, or 20 µm or so, and the upper limit thereof may be 29 µm, 28 µm, 27 µm, 26 µm, 25 µm, 24 µm, 23 µm, 22 µm, 21 µm or about 20 µm or so. The average particle diameter of the second filler may be less than or equal to, or less than any one of the above-described upper limits, may be more than or equal to, or more than any one of the above-described lower limits, or may be within a range of less than or equal to, or less than any one of the above-described upper limits while being more than or equal to, or more than any one of the above-described lower limits.

The lower limit of the third filler may be 0.01 µm, 0.1 µm, about 0.5 µm, 1 µm, 1.5 µm, or 2 µm or so, and the upper limit thereof may also be 5 µm, 4.5 µm, about 4 µm, 3.5 µm, 3 µm, 2.5 µm or 2 µm or so. The average particle diameter of the third filler may be less than or equal to, or less than any one of the above-described upper limits, may be more than or equal to, or more than any one of the above-described lower limits, or may be within a range of less than or equal to, or less than any one of the above-described upper limits while being more than or equal to, or more than any one of the above-described lower limits.

The ratio (D1/D3) of the average particle diameter (D1) of the first filler to the average particle diameter (D3) of the third filler in the filler component may be in a range of 25 to 300.

In one example, the third filler may be a filler having the smallest average particle diameter among fillers included in the filler component when the filler component comprises two or more fillers having different average particle diameters, and the first filler may be a filler having the largest average particle diameter among fillers included in the filler component when the filler component comprises two or more fillers having different average particle diameters. In such a state, the particle diameter ratio may be satisfied.

The lower limit of the ratio (D1/D3) may be 25, 26, 27, 28, 29, 30, 31, 32, 33, 34, 35, 40, 50, 60, 70, 80, 90, 100, 110, 120, 130, 140, 150, 160, 170, 180, 190, 200, 210, 220, 230 or 235 or so, and the upper limit thereof may be 300, 290, 280, 270, 260, 250, 240, 220, 200, 180, 160, 140, 120, 100, 95, 90, 85, 80, 75, 70, 65 or 60 or so. The ratio may be less than or equal to, or less than any one of the above-described upper limits, may be more than or equal to, or more than any one of the above-described lower limits, or may be within a range of less than or equal to, or less than any one of the above-described upper limits while being more than or equal to, or more than any one of the above-described lower limits.

In the filler component, the lower limit of the ratio (D1/D2) of the average particle diameter (D1) of the first filler to the average particle diameter (D2) of the second filler may be 3, 3.1, 3.2, 3.3, 3.4, or 3.5 or so, or may also be 20, 18, 17, 16, 15, 14, 13, 12, 11, 10, 9, 8, 7, 6, 5 or 4 or so. The ratio may be less than or equal to, or less than any one of the above-described upper limits, may be more than or equal to, or more than any one of the above-described lower limits, or may be within a range of less than or equal to, or less than any one of the above-described upper limits while being more than or equal to, or more than any one of the above-described lower limits.

As the filler, for example, a ceramic material such as aluminum oxide (alumina: Al₂O₃), aluminum nitride (AlN), boron nitride (BN), silicon nitride (Si₃N₄), silicon carbide (SiC), beryllium oxide (BeO), zinc oxide (ZnO), magnesium oxide (MgO), aluminum hydroxide (Al(OH)₃), magnesium hydroxide (Mg(OH)₂), calcium carbonate (CaCO₃) and/or boehmite may be used. Such a filler is advantageous in satisfying the thermal conductivity within the above-mentioned range, and additionally, the above-described insulation properties and the like may also be satisfied through the application of a ceramic filler.

The upper limit of the proportion of the filler component in the composition may be 98 weight%, 97.5 weight%, 97 weight%, 96.5 weight%, 96 weight%, 95.5 weight%, 95 weight%, 94.5 weight%, 94 weight%, 93.5 weight%, 93 weight%, 92.5 weight%, 92 weight%, 91.5 weight%, 91 weight%, 90.5 weight%, 90.0 weight%, 89.5 weight%, 89.0 weight%, 88.5 weight% or 88.0 weight% or so, and the lower limit thereof may be about 70 weight%, 71 weight%, 72 weight%, 73 weight%, 74 weight%, about 75 weight%, 76 weight%, 77 weight%, 78 weight%, 79 weight%, 80 weight%, 81 weight%, 82 weight%, 83 weight%, 84 weight%, 85 weight%, 86 weight%, 87 weight% or 88 weight% or so. The ratio may be less than or equal to, or less than any one of the above-described upper limits, may be more than or equal to, or more than any one of the above-described lower limits, or may be within a range of less than or equal to, or less than any one of the above-described upper limits while being more than or equal to, or more than any one of the above-described lower limits.

When the composition is a one-component composition, the content of the filler component may be a ratio based on the total weight of the relevant composition, and in the case of a two-component composition, it may be a ratio based on the combined weight of the main part and the curing agent part of the two-component composition, or may be a ratio based on the total weight of the main part or the curing agent part alone.

When the composition is composed of the two-component composition, it may be appropriate that the filler component to be applied to the final cured body as the filler component is divided in substantially equal amounts and introduced into the main and curing agent parts, respectively. For example, in the two-component composition, the ratio (A/B) of the weight (A) of the filler included in the main part and the weight (B) of the filler included in the curing agent part may be within a range of 0.5 to 2, within a range of 0.5 to 1.5, or within a range of 0.8 to 1.2.

The filler component may comprise various types of fillers, if necessary, in addition to the thermally conductive filler, and for example, a carbon filler such as graphite, fumed silica, or clay, and the like may be applied.

The composition may further comprise necessary components in addition to the above-described components.

In one example, the composition may further comprise a plasticizer. As described above, in the present application, it is possible to secure low adhesion force to a specific material without applying a plasticizer, but a small amount of plasticizer may also be applied if necessary.

The type of the applicable plasticizer is not particularly limited, and for example, a phthalate-based plasticizer such as dioctyl phthalate (DOP), dibutyl phthalate (DBP), butylbenzyl phthalate (BBP), diisononyl phthalate (DINP) or polyethylene terephthalate (PET), an adipate-based plasticizer such as dioctyl adipate (DOA) or diisononyl adipate (DINA), a fatty acid-based plasticizer, a phosphoric acid-based plasticizer, or a polyester-based plasticizer, and the like may be applied.

When the plasticizer is included, the ratio may be adjusted according to the purpose. For example, when the plasticizer is included, the lower limit of the weight ratio of the plasticizer relative to 100 parts by weight of the polyol compound may be 0.5 parts by weight, 1.5 parts by weight, 2 parts by weight, 3 parts by weight, 4 parts by weight, 5 parts by weight, 6 parts by weight, 7 parts by weight, 8 parts by weight, 9 parts by weight, 10 parts by weight, 15 parts by weight, 20 parts by weight, 25 parts by weight, 30 parts by weight, 35 parts by weight, 40 parts by weight, 45 parts by weight, 50 parts by weight, 100 parts by weight, 150 parts by weight, 200 parts by weight, 250 parts by weight or 300 parts by weight or so, and the upper limit thereof may also be 500 parts by weight, 450 parts by weight, 400 parts by weight, 350 parts by weight, 300 parts by weight, 250 parts by weight, 200 parts by weight, 150 parts by weight, 100 parts by weight, 90 parts by weight, 80 parts by weight, 70 parts by weight, 60 parts by weight, 50 parts by weight, 40 parts by weight, 30 parts by weight, 20 parts by weight, 19 parts by weight, 18 parts by weight, 17 parts by weight, 16 parts by weight, 15 parts by weight, 14 parts by weight, 13 parts by weight, 12 parts by weight, 11 parts by weight, 10 parts by weight, 9 parts by weight, 8 parts by weight, 7 parts by weight, 6 parts by weight, 5 parts by weight, 4 parts by weight, 3 parts by weight, 2 parts by weight or 1 part by weight or so. The ratio may be less than or equal to, or less than any one of the above-described upper limits, may be more than or equal to, or more than any one of the above-described lower limits, or may be within a range of less than or equal to, or less than any one of the above-described upper limits while being more than or equal to, or more than any one of the above-described lower limits.

The ratio may also be changed in consideration of the composition or intended use of the entire composition.

In addition to the above components, the composition may comprise additional components as needed. It may further comprise, as an example of additional components, a catalyst that assists or accelerates the curing reaction, a viscosity modifier (e.g., thixotropy imparting agent, diluent, etc.) for increasing or decreasing the viscosity, or for adjusting the viscosity according to shear force, a dispersing agent, a surface treatment agent, or a coupling agent, and the like.

The composition may further include a flame retardant or a flame-retardant adjuvant. In this case, a known flame retardant may be used without special limitation, and for example, a solid filler type flame retardant or a liquid flame retardant may be applied.

The flame retardant includes, for example, an organic flame retardant such as melamine cyanurate or an inorganic flame retardant such as magnesium hydroxide, and the like. When the amount of filler filled in the resin layer is large, a liquid type flame retardant material (TEP, triethyl phosphate, or TCPP, tris(1,3-chloro-2-propyl) phosphate, etc.) may also be used. In addition, a silane coupling agent capable of acting as a flame-retardant synergist may also be added.

As described above, the composition may be the one-component composition or the two-component composition. In the case of the two-component composition, the above-described respective components of the composition may be separately included in the main part and the curing agent part which are physically separated.

In one example, the present application relates to a composition (two-component composition) in which the composition is composed of a two-component composition.

Such a two-component composition may comprise at least a main part and a curing agent part, where the main and curing agent parts may be physically separated from each other. When the main and curing agent parts thus physically separated are mixed, a curing reaction may be initiated, and as a result, polyurethane may be formed.

In the two-component composition, the main part may comprise at least the polyol compound, and the curing agent part may comprise at least the polyisocyanate.

When the monohydric alcohol and/or thiol compound as described above is included in the composition, this compound may be included, for example, in the main part.

In addition, the filler component may be included in any one of the main and curing agent parts, or may be included in both the main and curing agent parts. When the filler component is included in both the main and curing agent parts, the same amount of the filler component may be included in the main and curing agent parts.

The catalyst, plasticizer, flame retardants, and the like as other components may be included in the main and/or curing agent part as needed.

Furthermore, in the two-component composition, a volume ratio (P/N) of the volume (P) of the main part to the volume (N) of the curing agent part may be in a range of about 0.8 to 1.2.

Such a two-component composition or the cured body thereof may also exhibit the adhesion force to aluminum, thermal conductivity, hardness, curvature radius, insulation, flame retardancy, specific gravity and/or 5% weight loss temperature in a thermogravimetric analysis (TGA), and the like.

The present application also relates to a product comprising the composition or the cured body thereof. The composition of the present application or the cured body thereof may be usefully applied as a heat dissipation material. Therefore, the product may comprise a heat-generating component. The term heat-generating component means a component that emits heat during use, and the type is not particularly limited. The representative heat-generating component includes various electric/electronic products comprising battery cells, battery modules, or battery packs, and the like.

The product of the present application may comprise, for example, the heat-generating component and the composition (or the two-component composition) or the cured body thereof existing adjacent to the heat-generating component.

A specific method of configuring the product of the present application is not particularly limited, and if the composition or the two-component composition of the present application, or the cured body thereof is applied as a heat dissipation material, the product may be configured in various known ways.

### Advantageous Effects

The present application can provide a composition that when it is curable, it can be cured at room temperature, and can form a heat dissipation material exhibiting an appropriate level of hardness, low adhesion force, and excellent thermal conductivity. In addition, the present application can achieve the low adhesion force, and the like without using a plasticizer or the like, or in a state where even if the plasticizer is used, the use ratio thereof is minimized. The present application can also provide a product comprising the composition, or a cured body thereof.

### Mode for Invention

Hereinafter, the present application will be specifically described through Examples, but the scope of the present application is not limited by the following examples.

The cured body mentioned below is formed by mixing main and curing agent parts of all compositions in Examples or Comparative Examples, which are prepared in a two-component type in a volume ratio of 1:1, and then maintaining the mixture at room temperature for about 24 hours.

### 1. Thermal conductivity

The thermal conductivity of the composition or the cured body thereof was measured by a hot-disk method according to ISO 22007-2 standard. Specifically, mixtures of the main parts and the curing agent parts in a volume ratio of 1:1 in Examples or Comparative Examples composed of a two-component type were each placed in a mold having a thickness of about 7 mm or so, and the thermal conductivity was measured in the through plane direction using the Hot Disk equipment. As stipulated in the above standard (ISO 22007-2), the Hot Disk equipment is an equipment that can check the thermal conductivity by measuring the temperature change (electrical resistance change) while the sensor with the nickel wire double spiral structure is heated, and the thermal conductivity was measured according to this standard.

### 2. Measurement of adhesion force to aluminum

An uncured composition (a mixture of a main part and a curing agent part) was coated in the center of an aluminum substrate having horizontal and vertical lengths of 2 cm and 7 cm, respectively, to have a width of 2 cm and a length of 2 cm or so, and an aluminum substrate having horizontal and vertical lengths of 2 cm and 7 cm, respectively, was attached again on the coating layer, and the composition was cured by maintaining the state. Here, the two aluminum substrates were attached to form an angle of 90 degrees to each other. Hereinafter, with the upper aluminum substrate fixed, the lower aluminum substrate was pressed at a speed of 0.5 mm/min to measure the force while the lower aluminum substrate was separated, and the adhesion force to aluminum was obtained by dividing the maximum force measured in the process by the area of the specimen (peel angle of 90 degrees).

### 3. Hardness measurement

The hardness of the cured body of the composition was measured according to ASTM D 2240 and JIS K 6253 standards. It was performed using ASKER's durometer hardness device, where the initial hardness was measured by applying a load of 1 Kg or more (about 1.5 Kg) to the surface of the sample (resin layer) in a flat state, and after 15 seconds, the hardness was evaluated by confirming the stabilized measurement value.

### 4. Measurement of curvature radius

The curvature radius of the cured body was evaluated using a cured body having a width, a length, and a thickness of 1cm, 10cm, and 2mm, respectively. When the cured body is attached to cylinders having various radii and bent along the longitudinal direction, the curvature radius is the minimum radius of the cylinder at which cracks do not occur in the cured body. In addition, in this specification, the unit of curvature radius is mm, unless otherwise specified.

### 5. Measurement of number average molecular weight

The weight average molecular weight (Mn) was measured using GPC (Gel permeation chromatography). Specifically, the weight average molecular weight (Mn) can be measured by adding a sample to be analyzed into a 5 mL vial, diluting it with a THF (tetrahydrofuran) solvent to a concentration of about 1 mg/mL, and then filtering a standard sample for calibration and the analysis sample through a syringe filter (pore size: 0.45 µm). Agilent technologies' ChemStation is used as an analysis program, and the weight molecular weight (Mn) can be obtained by comparing the elution time of the sample with the calibration curve.

### <GPC measurement conditions>

Instrument: Agilent technologies' 1200 series
Column: using Agilent technologies' TL Mix. A & B
Solvent: THF (tetrahydrofuran)
Column temperature: 35°C
Sample concentration: 1 mg/mL, 200 µl injection
Standard samples: using polystyrene (MP: 3900000, 723000, 316500, 52200, 31400, 7200, 3940, 485).

### Example 1.

### Preparation of main part

A trifunctional polyester polyol (Kuraray, F-2010) and a bifunctional polyether polyol (polypropylene glycol) (Kumho Petrochemical, PPG-1000D) as polyol compounds, and 2-propylheptanol (2PH) as a monohydric alcohol were mixed with a filler component and a catalyst (dibutyltin dilaurate, DBTDL) to prepare the main part. Here, the trifunctional polyester polyol (Kuraray, F-2010) is a compound having three hydroxy groups, having a number average molecular weight of about 2000 g/mol, and having a 3-methyl-1,5-pentanediol unit, a trimethylol propane unit and an adipic acid unit, and the bifunctional polyether polyol is polypropylene glycol having a number average molecular weight of about 1000 g/mol. The mixing ratio of the above components was set to a weight ratio of 100:90:30:1869 (F-2010: PPG-1000D: 2-PH: filler component), and the catalyst was added in a catalytic amount. Here, the filler component was prepared by mixing a first alumina filler having an average particle diameter of about 70 µm, a second alumina filler having an average particle diameter of about 20 µm, and a third alumina filler having an average particle diameter of about 1 µm. The weight ratio during the mixing was about 60:20:20 (first alumina filler: second alumina filler: third alumina filler).

### Preparation of curing agent part

A trifunctional polyisocyanate (trifunctional HDI Trimer, Vencorex, HD T LV2) and a bifunctional polyisocyanate (Asahi Kasei, AE700-100) as polyisocyanate were mixed with a filler component to prepare the curing agent part. The mixing ratio was set to a weight ratio of 100:60:3271 (HD T LV2: AE700-100: filler component). Here, as the filler component, the same component as applied in the main part was used.

### Preparation of composition

A composition was prepared by preparing the main part and the curing agent part in a volume ratio of 1:1. The mixing and curing of the main part and the curing agent part were all performed at room temperature.

### Comparative Example 1.

### Preparation of main part

A bifunctional polyether polyol (polypropylene glycol) (Kumho Petrochemical, PPG-1000D) as a polyol compound was mixed with a filler component and a catalyst to prepare the main part. The mixing ratio of the above components was set to a weight ratio of 100:1010 (PPG-1000D: filler component), and the catalyst was added in a catalytic amount. As the filler component and the catalyst, the same components as in Example 1 were used.

### Preparation of curing agent part

A trifunctional polyisocyanate (trifunctional HDI Trimer, Vencorex, HD T LV2) and a bifunctional polyisocyanate (Asahi Kasei, AE700-100) as polyisocyanates were mixed with a filler component to prepare the curing agent part. The mixing ratio was set to a weight ratio of 100:25:5631 (HD T LV2: AE700-100: filler component). Here, the same filler component as in Example 1 was used.

### Preparation of composition

A composition was prepared by preparing the main part and the curing agent part in a volume ratio of 1:1. The mixing and curing of the main part and the curing agent part were all performed at room temperature.

### Comparative Example 2.

### Preparation of main part

A bifunctional polyether polyol (polypropylene glycol) (Kumho Petrochemical, PPG-1000D) as a polyol compound was mixed with a filler component and a catalyst to prepare the main part. The mixing ratio of the above components was set to a weight ratio of 100:1010 (PPG-1000D: filler component), and the catalyst was formulated in a catalytic amount. As the filler component and the catalyst, the same components as in Example 1 were used.

### Preparation of curing agent part

A trifunctional polyisocyanate (trifunctional HDI Trimer, Vencorex, HD T LV2) as a polyisocyanate was mixed with a filler component to prepare the curing agent part. The mixing ratio was set to a weight ratio of 100:4990 (HD T LV2: filler component:). Here, the same filler component as in Example 1 was used.

### Preparation of composition

A composition was prepared by preparing the main part and the curing agent part in a volume ratio of 1:1. The mixing and curing of the main part and the curing agent part were all performed at room temperature.

### Comparative Example 3.

### Preparation of main part

A bifunctional polyether polyol (polypropylene glycol) (Kumho Petrochemical, PPG-1000D) as a polyol compound was mixed with a filler component and a catalyst to prepare the main part. The mixing ratio of the above components was set to a weight ratio of 100:1156 (PPG-1000D: filler component), and the catalyst was formulated in a catalytic amount. As the filler component and the catalyst, the same components as in Example 1 were used.

### Preparation of curing agent part

A trifunctional polyisocyanate (trifunctional HDI Trimer, Vencorex, HD T LV2) was mixed with a filler component to prepare the curing agent part. The mixing ratio was set to a weight ratio of 100:4416 (HD T LV2: filler component). Here, the same filler component as in Example 1 was used.

### Preparation of composition

A composition was prepared by preparing the main part and the curing agent part in a volume ratio of 1:1. The mixing and curing of the main part and the curing agent part were all performed at room temperature.

### Comparative Example 4.

### Preparation of main part

A trifunctional polyester polyol (Kuraray, F-2010) and a bifunctional polyether polyol (polypropylene glycol) (Kumho Petrochemical, PPG-1000D) as polyol compounds were mixed with a filler component and a catalyst to prepare the main part. The mixing ratio of the above components was set to a weight ratio of 100:233:3788 (F-2010: PPG-1000D: filler component), and the catalyst was formulated in a catalytic amount. As the filler component and the catalyst, the same components as in Example 1 were used.

### Preparation of curing agent part

A trifunctional polyisocyanate (trifunctional HDI Trimer, Vencorex, HD T LV2) as a polyisocyanate was mixed with a filler component to prepare the curing agent part. The mixing ratio was set to a weight ratio of 100:4698 (HD T LV2: filler component). Here, the same filler component as in Example 1 was used.

### Preparation of composition

A composition was prepared by preparing the main part and the curing agent part in a volume ratio of 1:1. The mixing and curing of the main part and the curing agent part were all performed at room temperature.

### Comparative Example 5.

### Preparation of main part

A trifunctional polyester polyol (Kuraray, F-2010) and a bifunctional polyether polyol (polypropylene glycol) (Kumho Petrochemical, PPG-1000D) as polyol compounds were mixed with a filler component and a catalyst to prepare the main part. The mixing ratio of the above components was set to a weight ratio of 100:150:2825 (F-2010: PPG-1000D: filler component), and the catalyst was formulated in a catalytic amount. As the filler component and the catalyst, the same components as in Example 1 were used.

### Preparation of curing agent part

A trifunctional polyisocyanate (trifunctional HDI Trimer, Vencorex, HD T LV2) as a polyisocyanate was mixed with a filler component to prepare the curing agent part. The mixing ratio was set to a weight ratio of 100:4811 (HD T LV2: filler component). Here, the same filler component as in Example 1 was used.

### Preparation of composition

A composition was prepared by preparing the main part and the curing agent part in a volume ratio of 1:1. The mixing and curing of the main part and the curing agent part were all performed at room temperature.

### Comparative Example 6.

### Preparation of main part

A trifunctional polyester polyol (Kuraray, F2010) and a bifunctional polyether polyol (polypropylene glycol) (Kumho Petrochemical, PPG-1000D) as polyol compounds were mixed with a filler component and a catalyst to prepare the main part. The mixing ratio of the above components was set to a weight ratio of 100:100:2252 (F-2010: PPG-1000D: filler component), and the catalyst was formulated in a catalytic amount. As the filler component and the catalyst, the same components as in Example 1 were used.

### Preparation of curing agent part

A trifunctional polyisocyanate (trifunctional HDI Trimer, Vencorex, HD T LV2) as a polyisocyanate was mixed with a filler component to prepare the curing agent part. The mixing ratio was set to a weight ratio of 100:4912 (HD T LV2: filler component). Here, the same filler component as in Example 1 was used.

### Preparation of composition

A composition was prepared by preparing the main part and the curing agent part in a volume ratio of 1:1. The mixing and curing of the main part and the curing agent part were all performed at room temperature.

### Comparative Example 7.

### Preparation of main part

A trifunctional polyester polyol (Kuraray, F2010) and a bifunctional polyether polyol (polypropylene glycol) (Kumho Petrochemical, PPG-1000D) as polyol compounds were mixed with a filler component and a catalyst to prepare the main part. The mixing ratio of the above components was set to a weight ratio of 100:150:2793 (F-2010: PPG-1000D: filler component), and the catalyst was formulated in a catalytic amount. As the filler component and the catalyst, the same components as in Example 1 were used.

### Preparation of curing agent part

A trifunctional polyisocyanate (trifunctional HDI Trimer, Vencorex, HD T LV2) as a polyisocyanate was mixed with a filler component to prepare the curing agent part. The mixing ratio was set to a weight ratio of 100:5091 (HD T LV2: filler component). Here, the same filler component as in Example 1 was used.

### Preparation of composition

A composition was prepared by preparing the main part and the curing agent part in a volume ratio of 1:1. The mixing and curing of the main part and the curing agent part were all performed at room temperature.

### Comparative Example 8.

### Preparation of main part

A trifunctional polyester polyol (Kuraray, F2010) and a bifunctional polyether polyol (polypropylene glycol) (Kumho Petrochemical, PPG-1000D) as polyol compounds were mixed with a filler component and a catalyst to prepare the main part. The mixing ratio of the above components was set to a weight ratio of 100:150:2759 (F-2010: PPG-1000D: filler component), and the catalyst was formulated in a catalytic amount. As the filler component and the catalyst, the same components as in Example 1 were used.

### Preparation of curing agent part

A trifunctional polyisocyanate (trifunctional HDI Trimer, Vencorex, HD T LV2) as a polyisocyanate was mixed with a filler component to prepare the curing agent part. The mixing ratio was set to a weight ratio of 100:5344 (HD T LV2: filler component). Here, the same filler component as in Example 1 was used.

### Preparation of composition

A composition was prepared by preparing the main part and the curing agent part in a volume ratio of 1:1. The mixing and curing of the main part and the curing agent part were all performed at room temperature.

### Comparative Example 9.

### Preparation of main part

A trifunctional polyester polyol (Kuraray, F2010) as a polyol compound was mixed with a monohydric alcohol (2-propylheptanol, 2-PH), a filler component and a catalyst to prepare the main part. The mixing ratio of the above components was set to a weight ratio of 100: 11: 1230 (F-2010: 2-PH: filler component), and the catalyst was formulated in a catalytic amount. As the filler component and the catalyst, the same components as in Example 1 were used.

### Preparation of curing agent part

A trifunctional polyisocyanate (trifunctional HDI Trimer, Vencorex, HD T LV2) as a polyisocyanate was mixed with a filler component to prepare the curing agent part. The mixing ratio was set to a weight ratio of 100:3562 (HD T LV2: filler component). Here, the same filler component as in Example 1 was used.

### Preparation of composition

A composition was prepared by preparing the main part and the curing agent part in a volume ratio of 1:1. The mixing and curing of the main part and the curing agent part were all performed at room temperature.

### Comparative Example 10.

### Preparation of main part

A trifunctional polyester polyol (Kuraray, F2010) as a polyol compound was mixed with a monohydric alcohol (2-propylheptanol, 2-PH), a filler component and a catalyst to prepare the main part. The mixing ratio of the above components was set to a weight ratio of 100:25:1619 (F-2010: 2-PH: filler component: catalyst), and the catalyst was formulated in a catalytic amount. As the filler component and the catalyst, the same components as in Example 1 were used.

### Preparation of curing agent part

A trifunctional polyisocyanate (trifunctional HDI Trimer, Vencorex, HD T LV2) as a polyisocyanate was mixed with a filler component to prepare the curing agent part. The mixing ratio was set to a weight ratio of 100:3111 (HD T LV2: filler component). Here, the same filler component as in Example 1 was used.

### Preparation of composition

A composition was prepared by preparing the main part and the curing agent part in a volume ratio of 1:1. The mixing and curing of the main part and the curing agent part were all performed at room temperature.

### Comparative Example 11.

### Preparation of main part

A trifunctional polyester polyol (Kuraray, F2010) as a polyol compound was mixed with a monohydric alcohol (2-propylheptanol, 2-PH), a filler component and a catalyst to prepare the main part. The mixing ratio of the above components was set to a weight ratio of 100:67:2371 (F-2010: 2-PH: filler component), and the catalyst was formulated in a catalytic amount. As the filler component and the catalyst, the same components as in Example 1 were used.

### Preparation of curing agent part

A trifunctional polyisocyanate (trifunctional HDI Trimer, Vencorex, HD T LV2) as a polyisocyanate was mixed with a filler component to prepare the curing agent part. The mixing ratio was set to a weight ratio of 100:2555 (HD T LV2: filler component). Here, the same filler component as in Example 1 was used.

### Preparation of composition

A composition was prepared by preparing the main part and the curing agent part in a volume ratio of 1:1. The mixing and curing of the main part and the curing agent part were all performed at room temperature.

### Comparative Example 12.

### Preparation of main part

A trifunctional polyester polyol (Kuraray, F2010) as a polyol compound was mixed with a monohydric alcohol (2-propylheptanol, 2-PH), a filler component and a catalyst to prepare the main part. The mixing ratio of the above components was set to a weight ratio of 100:104:3046 (F-2010: 2-PH: filler component), and the catalyst was formulated in a catalytic amount. As the filler component and the catalyst, the same components as in Example 1 were used.

### Preparation of curing agent part

A trifunctional polyisocyanate (trifunctional HDI Trimer, Vencorex, HD T LV2) as a polyisocyanate was mixed with a filler component to prepare the curing agent part. The mixing ratio was set to a weight ratio of 100:2357 (HD T LV2: filler component). Here, the same filler component as in Example 1 was used.

### Preparation of composition

A composition was prepared by preparing the main part and the curing agent part in a volume ratio of 1:1. The mixing and curing of the main part and the curing agent part were all performed at room temperature.

The physical property evaluation results summarized for Example and Comparative Examples above are as shown in Table 1 below. In Table 1 below, bulk destruction means a case that when the cured body of the composition is peeled off from aluminum for measurement of adhesion force, the destruction of the cured body occurs, and thus it is impossible to measure the adhesion force at the interface between the aluminum and the cured body, and the case where the curvature radius is unmeasurable means a case that the hardness of the cured body is too low or the mechanical strength is not secured, whereby it is easily broken or becomes a brittle formulation, and thus the measurement is impossible.

**[Table 1]**

| | | Adhesion force (Al)(N/mm²) | Hardness (shore OO) | Curvature radius (mm) | Thermal conductivity (W/mK) |
|---|---|---|---|---|---|
| Example 1 | | 0.1 | 82~85 | 6.5 | 2.546 |
| Comparative Example | 1 | Bulk destruction | 18 | Unmeasurable | 2.537 |
| | 2 | Bulk destruction | 32~37 | Unmeasurable | 2.519 |
| | 3 | 1.07 | 72 | Unmeasurable | 2.698 |
| | 4 | 0.22 | 92 | >11 | 2.604 |
| | 5 | 0.27 | 94 | >11 | 2.633 |
| | 6 | 0.06 | 96 | >11 | 2.579 |
| | 7 | 0.17 | 92 | >11 | 2.564 |
| | 8 | 0.15 | 93 | >11 | 2.552 |
| | 9 | 0.18 | 95 | >11 | 2.802 |
| | 10 | 0.10 | 92 | 7 | 2.803 |
| | 11 | Bulk destruction | 0 | 0 | Unmeasurable |
| | 12 | Bulk destruction | 0 | 0 | Unmeasurable |

## Claims

1. A composition comprising a resin component and a filler component, and
having adhesion force to aluminum of 1 N/mm² or less and a shore OO hardness of less than 90.

2. The composition according to claim 1, having a thermal conductivity of 1.2 W/mK or more.

3. The composition according to claim 1 , wherein the resin component comprises a polyol compound, a monohydric alcohol, a thiol compound, a polyisocyanate compound, or a polyurethane.

4. The composition according to any one of claims 1 to 3, wherein the resin component comprises a polyfunctional polyol compound with 3 functionalities or more, and a bifunctional polyol compound.

5. The composition according to claim 4, wherein at least one of the polyfunctional polyol compound with 3 functionalities or more and the bifunctional polyol compound has a number average molecular weight in a range of 300 to 3000 g/mol.

6. The composition according to claim 4, wherein any one of the polyfunctional polyol compound with 3 functionalities or more and the bifunctional polyol compound has a number average molecular weight of 1500 g/mol or more, and the other has a number average molecular weight of less than 1500 g/mol.

7. The composition according to claim 4, wherein any one of the polyfunctional polyol compound with 3 functionalities or more and the bifunctional polyol compound is a polyester polyol, and the other is a polyether polyol.

8. The composition according to claim 7, wherein the polyester polyol comprises an alkane diol unit, a polyol unit, and a dicarboxylic acid unit, where the dicarboxylic acid unit is an adipic acid unit or a sebacic acid unit.

9. The composition according to claim 4, wherein the resin component comprises the bifunctional polyol compound in an amount of 5 to 200 parts by weight relative to 100 parts by weight of the polyfunctional polyol compound with 3 functionalities or more.

10. The composition according to claim 4, wherein the resin component further comprises a monohydric alcohol or thiol compound.

11. The composition according to claim 10, wherein the resin component comprises the monohydric alcohol or thiol compound in an amount of 1 to 100 parts by weight relative to 100 parts by weight of the polyfunctional polyol compound with 3 functionalities or more.

12. The composition according to any one of claims 1 to 3, wherein the resin component comprises a polyisocyanate.

13. The composition according to claim 12, wherein the polyisocyanate comprises a polyfunctional polyisocyanate with 3 functionalities or more, and a bifunctional polyisocyanate.

14. The composition according to claim 13, wherein the polyisocyanate comprises the bifunctional polyisocyante in an amount of 5 to 200 parts by weight relative to 100 parts by weight of the polyfunctional polyisocyanate with 3 functionalities or more.

15. The composition according to any one of claims 1 to 3, wherein the filler component is aluminum hydroxide, magnesium hydroxide, calcium hydroxide, hydromagnesite, magnesia, alumina, aluminum nitride, boron nitride, silicon nitride, silicon carbide, zinc oxide or beryllium oxide.

16. A two-component composition comprising:
a main part comprising a polyol component and a filler; and
a curing agent part comprising a curing agent component and a filler, and
having adhesion force to aluminum of 1 N/mm² or less, and a shore OO hardness of less than 90.

17. A product comprising a heat generating component, and the composition of claim 1 or the two-component composition of claim 16, or a cured body of the composition, which is present adjacent to the heat generating component.
